Europäisches Patentamt

European Patent Office

Office européen des brevets

(19)

(11) Numéro de publication : **0 442 779 A1**

(12) # DEMANDE DE BREVET EUROPEEN

(21) Numéro de dépôt : **91400273.8**

(51) Int. Cl.⁵ : **G02B 6/12**

(22) Date de dépôt : **05.02.91**

(30) Priorité : 13.02.90 FR 9001668

(43) Date de publication de la demande :
21.08.91 Bulletin 91/34

(84) Etats contractants désignés :
**DE GB**

(71) Demandeur : **THOMSON-CSF**
**51, Esplanade du Général de Gaulle**
**F-92800 Puteaux (FR)**

(72) Inventeur : **Ratovelomanana, Frédéric**
**THOMSON-CSF, SCPI, Cedex 67**
**F-92045 Paris la Defense (FR)**
Inventeur : **Bourbin, Yannic**
**THOMSON-CSF, SCPI, Cedex 67**
**F-92045 Paris la Defense (FR)**
Inventeur : **Papuchon, Michel**
**THOMSON-CSF, SCPI, Cedex 67**
**F-92045 Paris la Defense (FR)**

(74) Mandataire : **Guérin, Michel et al**
**THOMSON-CSF SCPI**
**F-92045 PARIS LA DEFENSE CEDEX 67 (FR)**

(54) **Guide d'onde optique intégré et procédé de réalisation.**

(57)    Guide d'onde optique intégré comportant une couche tampon (1) d'indice n1, un ruban (2) à fort indice n2, une couche de guidage d'indice n3.
Les indices de réfraction répondent à la relation :
n2 > n3 > n1.
L'épaisseur du ruban (2) est choisie très faible de façon à ne pas induire de pertes optiques.
Applications : Réalisation de composants optiques et électrooptiques.

FIG_8

EP 0 442 779 A1

## GUIDE D'ONDE OPTIQUE INTEGRE ET PROCEDE DE REALISATION

L'invention concerne un guide d'onde optique intégré et son procédé de réalisation. Notamment, elle concerne une structure dans laquelle le guide d'onde est enterré.

Depuis quelques années de nouveaux matériaux organiques présentant des propriétés électroniques intéressantes ont été développés. L'étude de tels matériaux comporte deux aspects distincts : conception du matériau (amélioration des caractéristiques physiques, synthèse chimique...) et, conception de composants optoélectroniques utilisant ces matériaux.

C'est dans le cadre de ce deuxième aspect que se situe l'objet de l'invention. Réaliser des composants optoélectroniques qui utilisent ces nouveaux matériaux impose d'une part de concevoir l'architecture du composant mais aussi de mettre au point tout le processus technologique nécessaire à la réalisation effective de ce composant.

L'objet de l'invention concerne donc des composants optoélectroniques utilisant des polymères organiques électrooptiques. Les matériaux organiques électrooptiques utilisés dans la réalisation de ces composants sont optiquement non linéaires. Cette non linéarité optique n'est généralement utilisable qu'après qu'ils aient été déposés en couche mince (dépôt à la tournette comme en microélectronique) et polarisés sous champ électrique. Il est ainsi possible de réaliser des modulateurs de phase ou d'intensité de petites dimensions présentant de bonnes caractéristiques optiques.

Pourtant le confinement monodimensionnel de la lumière ne suffit pas. La réalisation d'un composant optoélectronique impose la recherche du confinement bidimensionnel. En maîtriser la technologie permettra d'aboutir à une nouvelle génération de composants optoélectroniques intégrés à très faible coût : modulateurs de phase ou d'intensité, commutateurs électrooptiques pour télécommunications par fibres optiques, doubleurs de fréquence (pour obtention par exemple de rayonnement vert ou bleu) pour le stockage ou la lecture de données.

Un certain nombre de solutions permettant d'aboutir au confinement bidimensionnel ont déjà été développées.

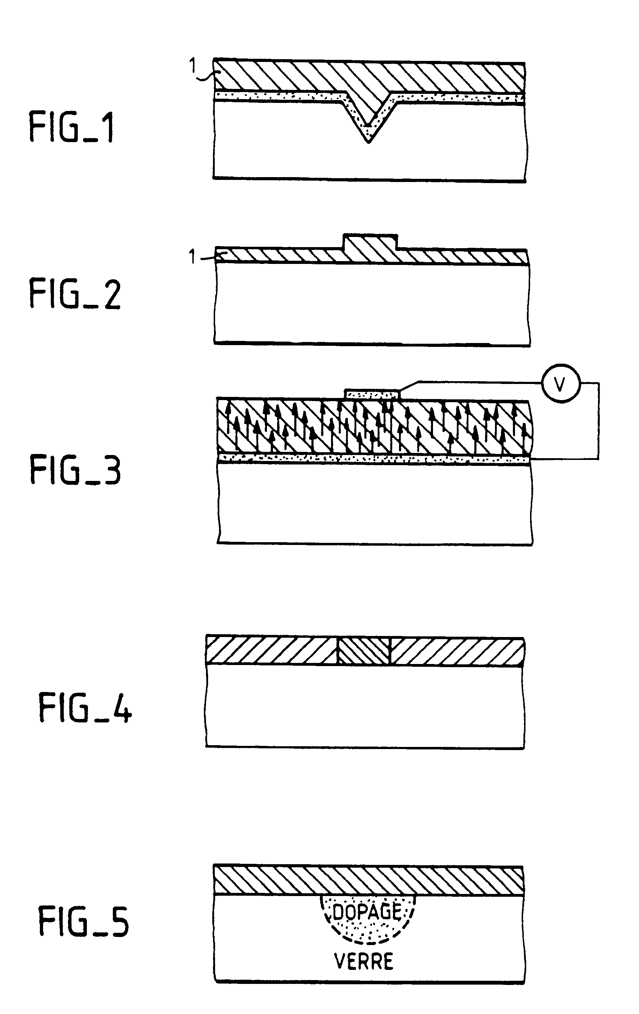

Une première solution représentée en figure 1, consiste à augmenter localement l'indice effectif vu par la lumière en augmentant localement l'épaisseur de polymère. Cependant, il est extrêmement difficile de tenir les côtes imposées par l'architecture du composant aussi bien transversalement qu'en profondeur. De plus, bien que la figure 1 montre une planarisation parfaite du polymère cela est rarement le cas en raison de la profondeur de la gravure.

Une deuxième solution, représentée en figure 2, prévoit une gravure chimique ou sèche directe du polymère 1 qui pose le problème du masque de gravure et la qualité du résultat obtenu.

Une troisième solution, représentée en figure 3, prévoit de déposer une électrode métallique sur le polymère puis de graver cette électrode ; cela pose des problèmes de sélectivité de gravure, et de dommages chimiques éventuels du polymère.

Selon une quatrième solution représentée en figure 4, on prévoit un confinement par modification locale de la nature du matériau. Cela peut être fait par insolation UV au travers d'un masque ce qui pose un problème de diffraction et de création d'un gradient d'indice par UV non contrôlable.

Enfin selon une cinquième solution représentée en figure 5, on prévoit une modification de l'assymétrie d'un guide planaire par dopage local d'un substrat de verre. Cette solution pose un problème de polissage des faces d'entrée et de sortie guide.

L'invention concerne un guide monomode bidimensionnel répondant aux conditions suivantes :
- préparation aisée des faces d'entrée et de sortie pour un couplage efficace de lumière provenant d'une fibre optique.
- ne pas être limité en dimensions par le processus technologique : pouvoir réaliser des guides microniques (1 à 2 μm) ou submicronique (0, 5 à 1,0 μm).
- diminuer les pertes à la propagation.
- développer une technologie collective pour une production à faible coût des composants.

L'invention concerne donc un guide d'onde optique intégré caractérisé en ce qu'il comporte sur un substrat :
- une couche tampon d'un premier indice de réfraction ;
- un élément en forme de ruban d'un deuxième indice de réfraction ;
- une couche de guidage en matériau d'un troisième indice de réfraction ;
ledit guide ayant en outre les caractéristiques suivantes :
- le deuxième indice de réfraction est supérieur au troisième indice lequel est supérieur au premier indice ;
- l'épaisseur du ruban est choisie très faible de façon à ne pas induire de pertes optiques mais à obtenir un confinement de la lumière en raison de son indice de réfraction élevé.

L'invention concerne également un procédé de réalisation d'un guide optique selon la revendication 1, caractérisé en ce qu'il comporte les étapes successives suivantes :
- une première étape de réalisation sur une couche tampon d'un premier indice d'une couche d'un matériau d'un deuxième indice supérieur au premier indice ;

– une deuxième étape de gravure dans cette couche de deuxième indice, d'au moins un ruban ;

– une troisième étape de dépôt sur le ruban et sur la couche tampon non recouverte par le ruban d'une couche de guidage d'un matériau d'un troisième indice de réfraction inférieur au deuxième indice de réfraction.

La couche de guidage peut être, selon une réalisation préférée de l'invention, en matériau polymère.

Le guide optique selon l'invention permet ainsi de confiner la lumière le long de rubans d'indice nettement supérieur à l'indice de la couche de guidage en polymère. Il peut ainsi être réalisé selon les techniques collectives de la microélectronique ce qui permet de diminuer le coût du composant.

De cette façon l'invention permet de résoudre les problèmes suivants :

– faible coût : on prévoit une fabrication collective de guides d'ondes sur un substrat silicium.

– préparation des faces d'entrée et de sortie du guide : on prévoit un clivage du composant.

– contrôle de la variation d'indice effectif : on règle l'épaisseur du ruban de fort indice.

– diminution des pertes et des dimensions du guide : on réalise le ruban par attaque plasma sélective (Réactive Ion Etching) ce qui permet de réaliser des guides microniques (1 à 2 $\mu$m) ou submicroniques (0,5 à 1 $\mu$m).

De plus, le dispositif et le procédé de l'invention ne sont pas limités par la fragilité ni la nature du polymère employé pour la couche de guidage.

Les différents objets et caractéristiques de l'invention apparaîtront dans la description qui va suivre ainsi que dans les figures annexées qui représentent :

– les figure 1 à 5, des techniques connues décrites précédemment ;

– la figure 6, un exemple de réalisation d'un guide optique selon l'invention ;

– la figure 7, une variante de réalisation du guide optique selon l'invention ;

– la figure 8, une vue en perspective du dispositif selon l'invention ;

– la figure 9, un exemple de réalisation du dispositif de l'invention comportant des électrodes pour appliquer un champ électrique ;

– la figure 10, une variante de réalisation du dispositif de la figure 9 ;

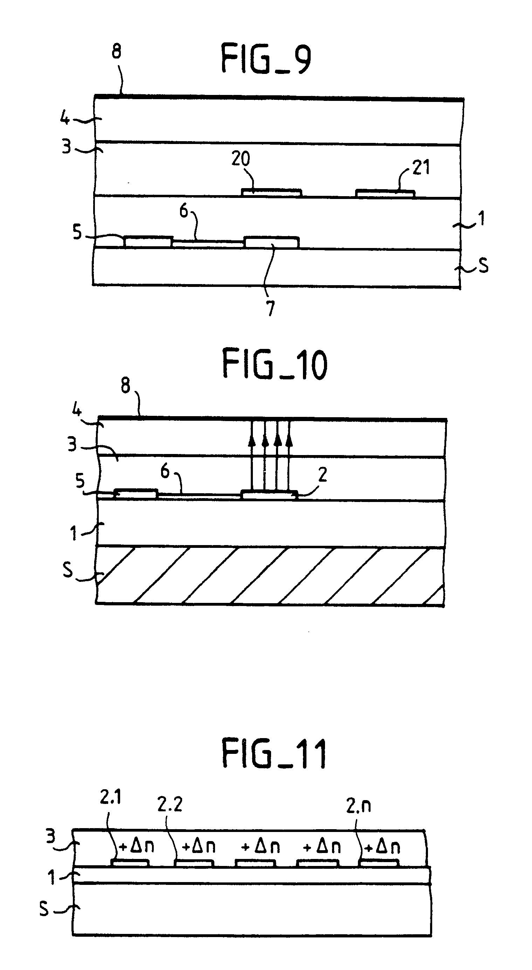

– le figure 11, un exemple de réalisation d'un réseau de phase obtenu en plaçant perpendiculairement à un guide optique un réseau de rubans de haut indice.

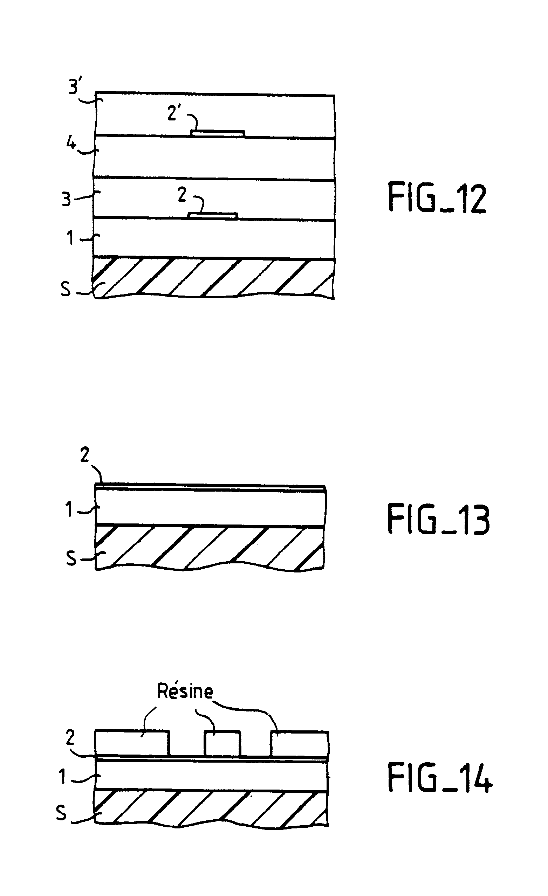

– la figure 12, un exemple de réalisation du dispositif de l'invention comportant plusieurs guides optiques intégrés ;

– les figures 13 et 14, des étapes illustrant le procédé de réalisation selon l'invention.

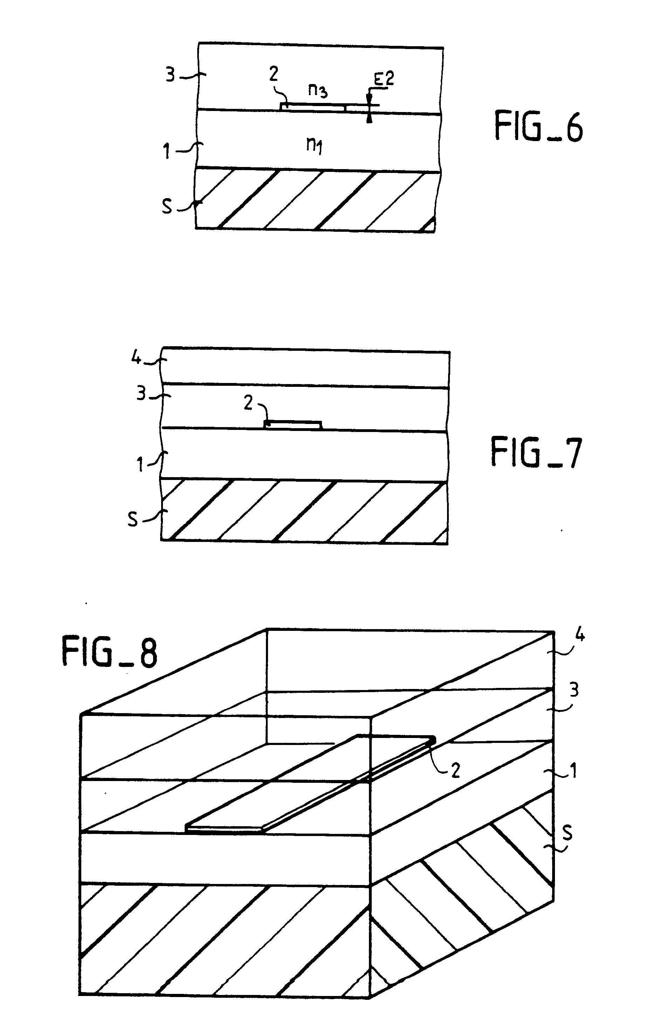

En se reportant à la figure 6, on va décrire un exemple de réalisation d'un guide optique selon l'invention. Un tel guide optique comporte sur un substrat S, une couche tampon 1 d'indice de réfraction n1. Sur cette couche 1 se trouve un élément en forme par exemple de ruban 2 réalisé dans un matériau d'indice n2. L'ensemble est recouvert d'une couche de guidage optique d'indice de réfraction n3.

L'indice de réfraction n2 du ruban 2 est supérieur à l'indice de réfraction n1 de la couche 1 et à l'indice de réfraction n3 de la couche 3.

$$n2 > n3 \quad n2 > n1$$

Les matériaux utilisés pour les couches 1 et 3 et le ruban 2 sont transparents à la longueur d'onde du guide optique et notamment le ruban 2 et la couche 3.

L'objet du ruban 2 de fort indice n2 inséré entre les deux couches 1 et 3 d'indices plus faibles est d'obtenir un confinement bidimensionnel de l'onde à transmettre dans le guide.

L'indice n2 du ruban 2 doit être suffisamment élevé pour que le confinement s'obtienne à l'aide d'une épaisseur très fine du ruban. Par exemple l'épaisseur du ruban 2 sera de quelques dizaines de nanomètres.

De cette façon :

– Il est possible de confiner la lumière principalement dans la couche d'indice $n = \sup(n_2, n_3)$ et de régler la forme du champ électrique de l'onde optique dans cette dernière couche en agissant, $n_2$ étant donné, sur l'épaisseur de celle-ci.

– Il est possible grâce à la faible épaisseur du ruban d'indice $n_2$ de ne considérer celui-ci que comme une perturbation au niveau du confinement de la lumière, ce qui permet d'affirmer que le ruban d'indice $n_2$ n'influence que très peu les pertes du guide.

Selon l'invention on prévoit également que l'indice $n_3$ est supérieur à l'indice $n_1$ de façon que le guidage se fasse dans la couche 3.

Selon un exemple de réalisation préféré de l'invention les matériaux utilisés sont :

substrat S = silicium et notamment du silicium cristallin ;

couche tampon 1 = silice thermique ;

ruban 2 = silicium amorphe ou en ITO (Indium-Tin-Oxyde) ou en $Si_3N_4$ ;

couche de guidage 3 = polymère.

Le polymère de la couche de guidage 3 peut être un polymère électro-optique ou non électro-optique.

Le dispositif de la figure 6 peut fonctionner dans l'air ambiant. La couche de guidage 3 est donc à sa partie supérieure dans un milieu d'indice n4 = 1.

La figure 7 représente un exemple de réalisation dans lequel la couche de guidage est recouverte par une couche tampon 4 d'indice n4 (superstrat).

La figure 8 représente une vue en perspective du dispositif de l'invention où l'on voit que l'élément 2 peut avoir la forme d'un ruban.

Une telle structure a été réalisée sur un substrat en silicium avec :

– une couche tampon 1 de silice d'épaisseur 3 μm dont l'indice n1 est de 1,45 à une longueur d'onde λ= 1,3 μm,

– un ruban 2 en silicium amorphe d'épaisseur 30 nm et d'indice n2 = 3, 8 pour λ= 1, 3 μm,

– une couche de guidage (d'épaisseur 0,7 μm) en polymère d'indice n3 = 1, 6 pour λ= 1, 3 μm.

La couche de guidage 3 était en contact avec l'air (n4 = 1 à sa partie supérieure).

Les indices effectifs des modes fondamentaux polarisés TE ou TM d'un tel guide d'onde sont :

$n_{TE} = 1,75$

$n_{TM} = 1,52$

Une structure analogue a été réalisée avec un ruban 2 en nitrure de silicium (au lieu de silicium amorphe) d'indice $n_2 = 1,8$ à $\lambda = 1,3$ μm. Avec une épaisseur du ruban 2 de 80 nm, on a obtenu les indices effectifs suivants :

$n_{TE} = 1,56$

$n_{TM} = 1,55$

Le dispositif de l'invention permet d'obtenir une variation d'indice effectif sur une couche guidante 3 par le choix de l'épaisseur du ruban 2.

De plus, il permet de régler la forme du champ dans la couche de guidage 3 en prévoyant un indice de réfraction n2 du ruban supérieur aux indices n1 et n3 et en ajustant l'épaisseur du ruban 2 à une valeur suffisamment faible.

De cette façon le ruban 2 permet d'obtenir un bon guidage optique sans introduire de pertes.

Le guidage optique selon l'invention peut être réalisé sous la forme d'un modulateur.

La figure 9 représente un tel modulateur qui comporte intégré sur un substrat S en matériau semiconducteur (tel que GaAs, InP, Silicium) des circuits microélectroniques de commande 5. Les circuits 5 sont reliés par des conducteurs 6 à une électrode de commande 7 réalisés également sur le substrat.

L'ensemble est recouvert par une structure guide d'onde comportant une couche tampon 1 (par exemple en silice), un ou plusieurs rubans 20,21 dont l'un d'eux au moins est situé au-dessus de l'électrode 7, une couche de guidage en polymère électro-optique 3, une couche tampon 4. La couche tampon comporte à sa face supérieure une électrode 8. Des moyens non représentés connectables aux électrodes permettent d'appliquer ainsi un champ électrique à la structure.

La structure de la figure 9 peut donc fonctionner en coupleur directionnel pour coupler la lumière d'un guide (guide réalisé par le ruban 20) dans l'autre guide (guide réalisé par le ruban 21).

Un tel dispositif peut ainsi être agencé en :

– modulateur,

– commutateur électrooptique à 2 entrées et 2 sorties ;

– doubleur de fréquence.

La figure 10 représente un dispositif dans lequel le ruban 2 est utilisé également comme électrode pour appliquer un champ électrique au guide d'onde. Dans ce cas, les circuits électroniques de commande 5 et les conducteurs de connexion 6 au ruban 2 sont réalisés sur la couche tampon 1.

Le ruban 2 (en silicium amorphe, ou oxyde d'indium-étain ITO, par exemple) permet à la fois de confiner la lumière mais aussi d'appliquer un champ électrique de modulation sur le matériau électrooptique de la couche 3. Cette structure permet d'améliorer l'efficacité du champ électrique appliqué et dans le cas, par exemple, d'un modulateur, d'améliorer l'efficacité de la modulation.

L'invention est également applicable à la réalisation de réseaux optiques intégrés tels que représenté en figure 11.

Pour cela on réalise perpendiculairement au-dessus d'un guide bidimensionnel ou d'un guide plan, un réseau de phase obtenu par réalisation d'un ensemble de rubans (2.1, 2.2,...2.n) de fort indice. Selon les techniques de réalisation utilisées pour la gravure des rubans 2.1 à 2.n, la largeur des rubans et le pas de réalisation peuvent être très faibles. On obtient ainsi un réseau d'indice permettant de moduler spatialement la phase d'une onde optique. Dans cette réalisation, le guidage peut se faire dans le plan ou en guidage linéaire.

Selon l'invention on prévoit également comme cela est représenté en figure 12, une structure à intégration verticale de guide optique.

Sur la couche de polymère 3 on a une autre couche tampon 4 sur laquelle se trouve un autre ruban 2' recouvert par une autre couche de guidage 3'.

L'ensemble peut être recouvert par une autre structure identique et ainsi de suite.

Le procédé de réalisation du guide d'onde optique selon l'invention va maintenant être décrit en se reportant aux figures 13 et 14. A titre d'exemple le substrat utilisé est du silicium.

Dans une première étape, la face SO du substrat S est nettoyée puis par oxydation thermique on fait croître une couche de silice thermique. On obtient ainsi la couche tampon 1 sur le substrat S.

Le processus de croissance de $SiO2$ sur silicium se fait dans un four d'oxydation.

A titre d'exemple, les conditions opératoires peuvent être les suivantes :

température du four : 1100° C

gaz d'oxydation : vapeur d'eau désionisée (STEAM)

durée de première oxydation : 7 heures environ

recuit du premier dépôt : 12 heures environ sous azote

durée de seconde oxydation : 7 heures environ

recuit du second dépôt : 2 heures environ sous azote.

Cette opération doit impérativement s'effectuer en continu. Les plaquettes ne doivent pas sortir du four pendant cette oxydation.

Il est à noter que la vitesse de croissance du film de silice sur substrat de silicium dépend de l'orientation de la plaquette de silicium.

Avec Si non dopé (100) on atteint difficilement trois microns.

Avec Si dopé (110), au bout de 7 heures on a déjà 2,5 $\mu$m et au bout de 14 heures on obtient 3.0 $\mu$m de $SiO_2$ thermique d'excellente qualité.

Le recuit sous azote des dépôts a pour but de détendre le matériau et de localiser l'énergie du matériau dans les joints de grains, et d'améliorer les qualités microélectroniques et optiques du matériau.

Au cours d'une deuxième étape, on réalise une couche mince d'un matériau de fort indice de réfraction n2. On obtient ainsi une structure telle que représentée en figure 13.

Le matériau utilisé doit remplir plusieurs conditions :

– avoir un indice nettement plus fort que le polymère et la silice,

– pouvoir être déposé en couche ultramince avec précision,

– être transparent à la longueur d'onde de travail,

– dans le cas d'un modulateur : pouvoir servir d'électrode, et donc avoir de bonnes qualités électriques (faible résistivité, etc...).

Ces caractéristiques conduisent à utiliser du nitrure de silicium ($Si_3N_4$) ou du silicium amorphe.

La technique de dépôt de ce matériau pourra être par exemple du type PECVD (Plasma Enhanced Chemical Vapor Deposition). On peut aussi envisager un dépôt par LPCVD (Low Pressure Chemical Vapor Deposition). L'épaisseur d'une couche de quelques dizaines de nanomètres (20 nm par exemple) peut être contrôlée à 4 % près.

Au cours d'une troisième étape on réalise la gravure de ruban dans la couche ainsi déposée au cours de la deuxième étape. Cette gravure peut se faire par attaque chimique sélective au travers d'un masque obtenu par photolithographie.

Cette photolithographie est une étape déterminante de ce procédé de fabrication. C'est elle qui va fixer la rugosité latérale des rubans.

La structure obtenue après la deuxième étape et portant une couche de silicium ou de nitrure est immédiatement résinée pour être protégée.

Ensuite, on enlève la couche de résine de protection dans un bain primaire d'acétone puis dans un bain secondaire de propanol froid pour éliminer les traces d'acétone.

L'élimination du propanol résiduel se fait par soufflage d'azote, et l'étuvage du dépôt durant une heure ou 1/2 heure à 150°.

Ensuite on réalise un dépôt d'une couche photosensible puis on insole à l'aide d'un rayonnement UV à travers un masque placé le plus près possible de la résine photosensible. Après développement de la résine et image, on obtient une structure telle que représentée en figure 14, on procède alors par attaque chimique sélective, telle qu'une attaque chimique assistée par un bombardement ionique (RIE), à la gravure du ruban. Enfin le masque en résine est enlevé.

Au cours d'une quatrième étape on procède au dépôt, à la tournette par exemple, d'une couche de polymère 3 et éventuellement d'une autre couche tampon 4. On obtient alors la structure de l'invention représentée en figure 6.

Le procédé de l'invention permet donc de réaliser un confinement tridimensionnel dans des composants optoélectroniques utilisant des matériaux organiques, électrooptiques.

Jusqu'à maintenant les solutions proposées consistent par exemple à augmenter localement l'épaisseur de la couche de polymère (par une gravure du polymère ou du substrat) soit à modifier localement la structure intime du matériau par une insolation UV. Dans les deux cas on se heurte à des problèmes de dimensions (les guides selon l'état de la technique sont larges de 5 $\mu$m minimum), de contrôle de la variation d'indice effectif (gradient d'indice pour les guides réalisés par insolation UV), mais surtout de définition des bords de guides (problème prépondérant dans les gravures directes du polymère).

La solution proposée peut être satisfaisante à tous ces points de vues :

a) - diminutions transversales du guide : technologiquement cette méthode de conception de guides avec des matériaux organiques s'inscrit dans les technologies usuelles de la microélectronique.

Avec la RIE, il est possible de réaliser des guides de 200 nm de large. Il est donc possible de réaliser des guides. On peut imaginer descendre plus bas de cette dimension avec une lithographie électronique.

b - netteté du guide réalisé : qualité de la définition

c - La RIE reproduit le masque de résine : guide de bonne qualité

d - contrôle de la variation d'indice effectif : en effet, l'indice effectif est fonction de 3 paramètres qui sont : l'épaisseur de la zone de fort indice, l'épaisseur de la couche de polymère, et la valeur de l'indice le plus élevé.

Notons enfin que cette méthode de confinement évite de perturber la couche de polymère.

L'invention est applicable à la réalisation de :

– modulateurs organiques large bande (de phase ou d'intensité)
– doubleurs de fréquence
– dispositifs intégrés à plusieurs niveaux, composants à plusieurs niveaux, interconnexions optiques
– commutateurs optiques à 2 entrées et 2 sorties.

## Revendications

1. Guide d'onde optique intégré caractérisé en ce qu'il comporte sur un substrat 1 :
   – une couche tampon (1) d'un premier indice de réfraction (n1) ;
   – un élément en forme de ruban (2) d'un deuxième indice de réfraction (n2) ;
   – une couche de guidage (3) en matériau d'un troisième indice de réfraction (n3) :
   ledit guide ayant en outre les caractéristiques suivantes :
   – le deuxième indice de réfraction (n2) est supérieur au troisième indice (n3) lequel est supérieur au premier indice (n1) ;
   – l'épaisseur (e2) du ruban (2) est choisie très faible de façon à ne pas induire de pertes optiques mais à obtenir un confinement de la lumière en raison de son indice de réfraction (n2) élevé.

2. Guide d'onde optique selon la revendication 1, caractérisé en ce que la couche de guidage (3) est en matériau électrooptique et que l'épaisseur (e2) du ruban (2) est choisie de façon à ajuster la forme du champ électrique dans la couche de guidage (3).

3. Guide d'onde optique selon la revendication 1, caractérisé en ce que la couche de guidage (3) est un matériau polymère.

4. Guide d'onde optique selon la revendication 1, caractérisé en ce qu'il comprend une première électrode située sur la couche de guidage (3) au-dessus du ruban (2) et une deuxième électrode située du côté du substrat par rapport à la couche du guidage (3), ces électrodes permettant d'appliquer un champ électrique.

5. Guide d'onde optique selon la revendication 4, caractérisé en ce que le ruban (2) est en matériau conducteur de l'électricité et constitue la deuxième électrode.

6. Guide d'onde optique selon la revendication 1, caractérisé en ce que la couche tampon (1) est en silice thermique et que le ruban (2) est en silicium amorphe ou en oxyde d'indium étain ITO.

7. Guide d'onde optique selon la revendication 1, caractérisé en ce que le ruban (2) est en nitrure de silicium.

8. Guide d'onde optique selon la revendication 1, caractérisé en ce que la couche de guidage 3 est recouverte d'une couche tampon d'un quatrième indice de réfraction (n4) inférieur au troisième indice de réfraction (n3).

9. Guide d'onde optique selon la revendication 1, caractérisé en ce que plusieurs rubans (2.1, 2.2,...2.n) lui sont associés de façon à produire un réseau destiné à moduler spatialement la phase d'une onde optique.

10. Guide d'onde optique selon la revendication 1, caractérisé en ce que la couche de guidage (3) est recouverte par au moins une autre couche tampon (4) sur laquelle est située au moins un autre ruban (5) recouvert par au moins une autre couche de guidage 6.

11. Procédé de réalisation d'un guide optique selon la revendication 1, caractérisé en ce qu'il comporte les étapes successives suivantes :
    – une première étape de réalisation sur une couche tampon (1) d'un premier indice (n1) d'une couche d'un matériau d'un deuxième indice (n2) supérieur au premier indice (n1) ;
    – une deuxième étape de gravure dans cette couche de deuxième indice, d'au mois un ruban (2) ;
    – une troisième étape de dépôt sur le ruban (2) et sur la partie de la couche tampon (1) non recouverte par le ruban (2) d'une couche de guidage (3) d'un matériau d'un troisième indice de réfraction inférieur au deuxième indice de réfraction.

12. Procédé de réalisation selon la revendication 11, caractérisé en ce que le matériau de la couche de guidage (3) déposée au cours de la troisième étape est un matériau polymère.

FIG_1

FIG_2

FIG_3

V

FIG_4

FIG_5

DOPAGE

VERRE

FIG_6

FIG_7

FIG_8

## FIG_9

8

4

3

20

21

6

5

1

S

7

## FIG_10

8

4

3

5

6

2

1

S

## FIG_11

2.1

2.2

2.n

3

$+\Delta n$   $+\Delta n$   $+\Delta n$   $+\Delta n$   $+\Delta n$

1

S

FIG_12

FIG_13

Résine

FIG_14

Office européen
des brevets

**RAPPORT DE RECHERCHE EUROPEENNE**

Numéro de la demande

EP 91 40 0273

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl.5) |
| X | EP-A-0 240 400 (THOMSON-CSF) * page 4, lignes 22-34,50-57; page 5, lignes 25-30,48-54; page 6, lignes 7-20,33-41; page 6, ligne 44 - page 7, ligne 16, figures 5,6,9-13,18,19; revendications 1,6,19,32 * | 1,8,9 | G 02 B 6/12 |
| A | --- | 11 | |
| A | PRECCEDINGS OF THE FOURTH EUROPEAN CONFERENCE ON INTEGRATED OPTICS ECIO 87 11-13 mai 1987, pages 82-85, Glasgow, Scotland, GB; Y. BOURBIN et al.: "A new waveguide structure in InGaAsP/InP material" * page 82, paragraphe 3; page 83, paragraphe 1; figure 1 * --- | 1,8 | |
| A | APPLIED PHYSICS LETTER vol. 52, no. 13, 28 mars 1988, pages 1031-1033; J.I. THACKARA et al.: "Poled electro-optic waveguide formation in thin-film organic media" * abrégé; page 1031, colonne 1, paragraphe 3; figure 1; page 1032, colonne 1, paragraphe 2 * --- | 2,3 | |
| A | PROCEEDINSG OF THE 15TH EUROPEAN CONFERENCE ON OPTICAL COMMUNICATION vol. 1, septembre 1989, pages 425-428, Gothenburg, SE; M.B.J. DIEMEER et al.: "Polymeric channel waveguide modulators" * en entier * ----- | 2,3,9 | DOMAINES TECHNIQUES RECHERCHES (Int. Cl.5) G 02 B G 02 F |

Le présent rapport a été établi pour toutes les revendications

| Lieu de la recherche | Date d'achèvement de la recherche | Examinateur |
|---|---|---|
| BERLIN | 06-05-1991 | HYLLA W R |